# EUROPÄISCHE PATENTSCHRIFT

(11) **EP 3 563 796 B1**
(45) Veröffentlichungstag und Bekanntmachung des Hinweises auf die Patenterteilung: **05.10.2022**
(21) Anmeldenummer: 18170105.3
(22) Anmeldetag: 30.04.2018
(51) Int. Cl.: A61C 13/00, A61C 13/083

(54) **SYSTEM AUS DENTALRESTAURATIONSTEIL(EN) UND KÜHLVORRICHTUNG SOWIE VERFAHREN**
SYSTEM FROM DENTAL RESTORATION ELEMENT(S) AND COOLING DEVICE AND METHOD
SYSTÈME D'ÉLÉMENT(S) DE RESTAURATION DENTAIRE ET DISPOSITIF DE REFROIDISSEMENT AINSI QUE PROCÉDÉ

(43) Veröffentlichungstag der Anmeldung: 06.11.2019
(73) Patentinhaber: Ivoclar Vivadent AG, 9494 Schaan (LI)
(72) Erfinder: Senti, Theresa, 9486 Schaanwald (LI); Ott, Katja, 9492 Eschen (LI); Jussel, Rudolf, 6800 Feldkirch (AT); Rothbrust, Frank, 6822 Röns (AT); Arnold, Lars, 9473 Gams (CH); Lerch, Stefan, 3006 Bern (CH)
(74) Vertreter: Baronetzky, Klaus

(56) Entgegenhaltungen:
- WO-A1-2017/201381
- US-A- 4 475 370
- US-A1- 2013 241 095

## Beschreibung

Die Erfindung betrifft ein System aus einen Dentalrestaurationsteil sowie einer Kühlvorrichtung, gemäß dem Oberbegriff von Anspruch 1.

Typischerweise werden Dentalrestaurationsteile unter Wärmebehandlung hergestellt. Für die Erwärmung der Dentalrestaurationsteile dienen Dentalöfen, die einen Brennraum aufweisen, in dem meist mehrere Dentalrestaurationsteile zur gleichen Zeit gebrannt werden können.

Die Dentalrestaurationsteile bestehen häufig aus speziellen Dentalkeramiken wie Lithiumdisilikat oder Zirkoniumoxid und bedürfen einer besonderen Brennkurve, damit die erwünschten Eigenschaften bereitgestellt werden können.

Vor nicht allzu langer Zeit waren besonders für Zirkoniumoxid hierfür Zykluszeiten von mehreren Stunden, beispielsweise acht Stunden, erforderlich.

In neuerer Zeit sind Versuche unternommen worden, die Zykluszeit deutlich zu reduzieren auf deutlich geringere Zykluszeiten, selbst bei Zirkoniumoxidrestaurationen. Hierzu hat man eine größere Aufheizrate und eine größere Abkühlrate verwendet. Beides ist aufgrund der eingeleiteten Thermospannungen nicht unkritisch.

Dies gilt insbesondere für die Abkühlrate, da Thermospannungen dazu führen können, dass das keramische Dentalrestaurationsteil einen Sprödbruch erfährt, oder zumindest einen Riss.

Mikrorisse sind hier besonders kritisch, da sie häufig übersehen werden. In den Mikrorissen können sich im Mund des Patienten Bakterien ansammeln, die zu Infektionen führen können. Im Wesentlichen wirken sich Mikrorisse bei keramischen Restaurationen negativ auf die Langzeitstabilität und die mechanischen Eigenschaften über die Tragedauer aus.

Ein weiteres Problem ist die Bruchfestigkeit, gerade bei komplex gestalteten Dentalrestaurationen.

Um die bekannten Probleme zu vermeiden, wird typischerweise eine Abkühlrate ausgewählt, die gewährleistet, dass keine Risse und keine Restspannungen, insbesondere Zug-Druckspannungen, entstehen.

Dies führt jedoch dazu, dass gegebenenfalls die Abkühlzeit deutlich länger als die Heizzeit wird, was dem erwünschten kurzen Brennzyklus zuwiderläuft.

Das Abkühlen erfolgt häufig so, dass eine Brennhaube, in der der Brennraum ausgebildet ist, angehoben wird. Dies hat den Vorteil, dass die Stellfläche, auf der die Dentalrestaurationsteile liegen, nicht durch eine vermeidbare Bewegung erschüttert wird.

Die eintretende Umgebungsluft führt dann dazu, dass das Dentalrestaurationsteil abkühlt.

Es ist bereits vorgeschlagen worden, eine Zwangskühlung vorzunehmen, beispielsweise durch ein Gebläse. Ein solches hat jedoch den gravierenden Nachteil, dass die Abkühlung auf der Gebläseseite deutlich schneller erfolgt als auf der von dem Gebläse abgewandten Seite, so dass erhebliche Thermospannungen induziert werden, die zu Brüchen des Dentalrestaurationsteiles führen können. Systeme aus Dentalrestaurationsteilen und je einer Kühlvorrichtung sind auch aus den Druckschriften US 4 475 370 A1 und US 2013/2541 095 A1 bekannt.

WO 2017/201381 A1 offenbart das Strahlen eines Dentalrestaurationsteils mit Trockeneis.

Eine verbesserte Lösung zur Verhinderung der asymmetrischen Abkühlung lässt sich der DE 195 429 841 C1 entnehmen. Bei dieser Lösung wird eine Brennhaube nicht lediglich hochgeschwenkt, sondern zunächst vertikal angehoben und dann erst verschwenkt. Hierdurch lässt sich ein gleichmäßiger Luftzutritt von allen Seiten, und damit eine thermospannungsfreie Abkühlung, ermöglichen. Zur Vermeidung von Wärmespannungen wird die Brennhaube zunächst lediglich etwas angehoben, und daran anschließend stärker, so dass kein zu großes Delta-T entsteht. Diese Lösung erfordert daher nach wie vor einen vergleichsweise langen Abkühlungszeitraum.

Demgegenüber liegt der Erfindung die Aufgabe zugrunde, ein System aus einem Dentalrestaurationsteil oder mehreren Dentalrestaurationsteilen und einer Kühlvorrichtung gemäß dem Oberbegriff von Anspruch 1 zu schaffen, das hinsichtlich der Kühleffizienz verbessert ist, ohne dass thermische Spannungen entstehen würden.

Diese Aufgabe wird erfindungsgemäß durch die Merkmale des Hauptanspruchs gelöst. Vorteilhafte Weiterbildungen ergeben sich aus den Unteransprüchen. Erfindungsgemäß besonders günstig ist es, wenn das oder die Dentalrestaurationsteile in dem Bett aus Kühlkörpern in Kontakt mit diesen sind und so eine Abkühlung über eine Festkörper-Wärmeleitung erfolgen kann.

Das Dentalrestaurationsteil oder die Dentalrestaurationsteile ist oder sind von allen Seiten von Kühlkörpern umgeben. Dies bedeutet, dass eine einseitige Abkühlung wie bei der Verwendung eines Gebläses ausgeschlossen ist. Vielmehr wird das Dentalrestaurationsteil von allen Seiten gleichmäßig gekühlt.

Erfindungsgemäß wichtig ist auch die Relativbewegung zwischen dem Dentalrestaurationsteil und den Kühlkörpern über eine Bewegungsvorrichtung. Diese erlaubt es, immer neue und insofern kühlere Kühlkörper an das Dentalrestaurationsteil heranzuführen. Die erwärmten Kühlkörper werden abgeführt oder in dem Haufen oder Bett für die Dentalrestaurationsteile vermischt.

Die Relativbewegung zwischen dem Dentalrestaurationsteil und den Kühlkörpern kann in beliebiger geeigneter Weise durch die Bewegungsvorrichtung realisiert werden. Beispielsweise kann das Dentalrestaurationsteil in einem Strom von Kühlkörpern gehalten werden. In diesem Fall ist es günstig, wenn das Dentalrestaurationsteil durch den Strom auch mit gedreht wird, damit immer neue Seiten des Dentalrestaurationsteiles mit dem Strom der Kühlkörper in Kontakt geraten.

Erfindungsgemäß weist eine Kühlkörper-Auflagefläche aktive Kühlelemente auf.

Erfindungsgemäß ist es günstig, wenn mindestens ein Teil der Abkühlphase durch das erfindungsgemäße Verfahren mit der Relativbewegung zwischen Kühlkörpern und den Dentalrestaurationsteilen realisiert wird.

Sehr heisse Dentalrestaurationsteile können so zunächst beispielsweise in der Umgebungsluft für eine kurze Zeit abkühlen. Zu diesem Zeitpunkt ist das Delta-T sehr groß, so dass auch eine Konvektionskühlung noch wirksam ist.

Beispielsweise kann man so Zirkondioxid nach dem Sintern und öffnen des Ofenkopfes von ca. 1200 Grad abkühlen lassen, oder Lithiumdisilikat von ca. 700 Grad.

In beiden Fällen ist die Verfestigung der Keramik so weit fortgeschritten, dass eine Bewegung des Dentalrestaurationsteiles unkritisch ist.

Hier anschließend wird das Dentalrestaurationsteil mit den Kühlkörpern als Schüttgut in Kontakt gebracht, oder das Schüttgut wird dem Dentalrestaurationsteile zugeführt. Die erfindungsgemäß wirksame und gleichmäßig Kontaktkühlung oder Wärmeleitungskühlung wird in Gang gesetzt.

Unter "Dentalrestaurationsteil" seien hier sämtliche möglichen Arten von Dentalrestaurationsteilen im Singular oder im Plural zu subsumieren: Beispielsweise Zähne, die basierend auf Standardvorgaben hergestellt sind, oder solche, die speziell an den Patienten angepasst sind. Auch Inlays, Onlays, Brücken, Kronen, Teilkronen, Abutments und Abutmentkronen und Zahnbögen, Teilzahnbögen, Teilprothesen, Vollprothesen sowie beliebige andere wärmezubehandelnde Dentalprodukte.

Ferner seien hierunter Muffeln zu verstehen, in die Dentalrestaurationsteile eingebettet sind.

Zu den für die Dentalrestaurationsteile verwendeten Materialien gehören Keramiken, Composites und Metalle und Metalllegierungen sowie sämtliche anderen Dentalwerkstoffe, die eine Wärmebehandlung benötigen.

Für die Bereitstellung der Relativbewegung kann eine beliebige geeignete Bewegungsrichtung eingesetzt werden. Hierzu gehört beispielsweise eine Vorrichtung mit einer Rieselöffnung. Die Rieselöffnung kann sich oberhalb, unterhalb oder seitlich des Dentalrestaurationsteiles befinden und die Kühlkörper als Schüttgut durchlassen, und zwar in einer vorgegebenen Strömungsrate.

Die Strömungsrate kann zudem einstellbar sein, beispielsweise indem die Größe oder Form der Rieselöffnung verstellt wird.

Die Rieselöffnung kann sowohl stromauf als auch stromab des Dentalrestaurationsteiles vorgesehen sein.

Das Dentalrestaurationsteil kann auf einer Art Rost oder Sieb gehalten sein, das so geformt ist, dass die Bewegung der Kühlkörper zu einer Bewegung des Dentalrestaurationsteiles führt.

Hierzu kann beispielsweise der Strom der Kühlkörper mit seiner Haupt-Strömungsrichtung etwas seitlich der Mitte des Dentalrestaurationsteiles geführt sein, so dass das Dentalrestaurationsteil durch die Reibung der Kühlkörper mit gedreht wird.

Die Kühlkörper können auch in einer Siebtrommel nach der Art einer Wäschetrommel zusammen mit dem Dentalrestaurationsteil bewegt werden. Deren Sieböffnungen können so klein gewählt werden, dass die Kühlkörper hindurch passen, das Dentalrestaurationsteil hingegen nicht.

Bevorzugt sind die Kühlkörper abriebfest und staubfrei, so dass keine Verunreinigung an dem Dentalrestaurationsteil verbleiben.

Bevorzugt weisen die Kühlkörper Kontaktflächen auf, die unterschiedlich geformt sind, so dass auch bei verschiedenen Dentalrestaurationsteilen passende Kontaktflächen vorliegen und eine flächige Anlage möglich ist. Hierdurch wird die Wärmeableitung von der Restauration zum Kühlkörper verbessert.

Es kann aber auch vorteilhaft sein, wenn die Kühlkörper im Wesentlichen kugelförmig sind.

Kühlkörper mit besserer Rundheit haben beste Fliesseigenschaften, was der Kühlwirkung gerade durch die intensive Bewegung zugute kommt. Zudem wird durch solche Kühlkörper vermieden, dass Vorsprünge dieser die Dentalrestauration beschädigen können.

Wenn die Kontakte zu den Dentalrestaurationsteilen aufgrund der balligen Ausgestaltung der Kontaktflächen eher punktförmig sind, erfolgt eine lediglich punktförmig Wärmeableitung. Dann ist es wichtig, dass eine Vielzahl von Kontaktpunkten vorliegen, um dennoch die gewünschte intensive, aber schonende Kühlung sicherzustellen

Bei geringerer Relativgröße der Kühlkörper zu den Dentalrestaurationsteilen entsteht eine größere Anzahl von Kontaktpunkten, und dementsprechend eine intensivere Kühlung.

Durch entsprechende Dimensionierung läßt sich insofern die Kühlleistung in weiten Bereichen an die Erfordernisse anpassen.

Vorsorglich kann dennoch das Dentalrestaurationsteil nach der erfindungsgemäßen Abkühlung beispielsweise durch Druckluft gereinigt werden.

Besonders günstig ist auch eine Tiefkühlvorrichtung als Teil der Kühlvorrichtung. Diese kann die Kühlkörper bei Bedarf nachkühlen. Hierzu gerät ein sich ändernden Teil der Kühlkörper während Ihrer Relativbewegung bezogen auf das Dentalrestaurationsteil oder die Muffel in die Nachbarschaft der Tiefkühlvorrichtung und wird nachgekühlt.

Dies ist besonders für die letzte Kühlungsphase nahe der Raumtemperatur günstig, da diese dann signifikant beschleunigt werden kann. Die Tiefkühlvorrichtung kann extern oder bevorzugt unten in dem Relativbewegungsraum der Kühlkörper angeordnet sein.

Erfindungsgemäß ist es günstig, wenn die Kühlkörper aus einem Material bestehen, das eine gute Wärmeabfuhr ermöglicht. Beispielsweise ist es möglich, gesinterte Keramikkörper mit gezielt ausgebildeten Kontaktflächen als Kühlkörper zu verwenden. Alternativ kann auch eine metallische Realisierung der Kühlkörper angestrebt werden, beispielsweise gerade, wenn eine Muffel gekühlt werden soll, wobei metallische Kühlkörper eine verbesserte Wärmeleitung ermöglichen. Ein Werkstoffverbund oder Verbundwerkstoffe aus Metall und Keramik sind ebenfalls günstig, da dann die Keramikaussenfläche abriebfest ist und eine Kontamination verhindert und Metallkerne die Wärmeabfuhr beschleunigen.

Es sind auch mit Keramik beschichtete Metallkugeln besonders günstig für den Einsatz als Kühlkörper.

Es versteht sich, dass die Kühlkörper die maximal bestehende Temperatur des Dentalrestaurationsteiles aushalten können, beispielsweise 1200 Grad Celsius oder 1000 Grad Celsius.

Durch die Anlage und Kontaktierung erfolgt eine Wärmeübertragung vom Dentalrestaurationsteil auf die Kühlkörper. Hierdurch werden die Kühlkörper etwas erwärmt und das Dentalrestaurationsteil stark abgekühlt. Die Masse der Dentalrestaurationsteile soll lediglich ein Bruchteil der Gesamtmasse der Kühlkörper betragen, beispielsweise 10 bis 100 %. Gleiches gilt für die Wärmekapazität.

Dennoch steigt die Temperatur der Kühlkörper durch die insofern bestehende Wärmezufuhr leicht an. Um dies zu kompensieren, können kühlere Kühlkörper gegen Ende des Abkühl-Zyklus zugeführt werden, beispielsweise solche, die zuvor in einem Kühlschrank aufbewahrt wurden.

In vorteilhafter Ausgestaltung ist es vorgesehen, dass die Kühlkörper je eine Mehrzahl von Kontaktflächen für den Kontakt mit dem Dentalrestaurationsteil aufweisen, die insbesondere unterschiedliche Größen und Formen aufweisen.

In weiterer vorteilhafter Ausgestaltung ist es vorgesehen, dass die Kühlkörper ballige Kontaktflächen, gerade Kontaktflächen und/oder konkave und/oder konvexe Kontaktflächen aufweisen, insbesondere eine Kombination dieser.

Die Kühlkörper und das Dentalrestaurationsteil sind einem beliebig gestalteten Raum untergebracht, in welchem sie ihre Bewegung relativ zueinander unter wechselnden Kontakten vollziehen. Dieser Raum wird insofern als Relativbewegungsraum bezeichnet und kann z.B. ein Gefäß oder ein Teil eines Gefäßes oder z.B. der Raum oberhalb einer Unterlage sein.

Eine andere Möglichkeit besteht darin, ein Wasserbett unterhalb eines Rost oder Siebs für die Aufnahme des Dentalrestaurationsteiles vorzusehen. Die Kühlkörper fallen dann zunächst auf das heiße Dentalrestaurationsteil und kühlen es ab. Wenn eine Temperatur etwas oberhalb der Raumtemperatur, beispielsweise 60 Grad Celsius, erreicht ist, wird die Zufuhr der Kühlkörper so fortgesetzt, dass diese, die als Schüttgut vorliegen, neben dem Rost oder Sieb oder durch es hindurch in das Wasserbett rutschen. Der Pegel des Wassers steigt an, so dass das Wasser das Dentalrestaurationsteil erreichen kann und dieses weiter abkühlt.

Besonders günstig ist es, wenn die Kühlkörper ein spezifisches Gewicht aufweisen, das dem des Dentalrestaurationsteils, ggf. einschließlich seiner Einbettung, mit einer Abweichung von höchstens +/- 30 %, insbesondere höchstens +/- 10%, entspricht.

Eine schwerkraftunterstützte Bewegung der Kühlkörper relativ zum Dentalrestaurationsteil ist bevorzugt. In vorteilhafter Ausgestaltung ist es vorgesehen, dass die zunächst größere und dann kleinere Kühlkörper mit dem Dentalrestaurationsteil in Anlage gebracht werden. Die Kühlgeschwindigkeit ist direkt von der Anzahl der Kontaktpunkte abhängig, welche wiederum näherungsweise mit 1/Durchmesser² von der Kühlkörpergröße abhängig ist, so dass hierdurch gegen Ende des Kühlzyklus in Hinblick auf das sinkende Delta T die Kühlgeschwindigkeit wieder erhöht werden kann.

Wenn dies nicht möglich ist, ist alternativ auch die Möglichkeit des Einsatzes eines Rührers, z.B. eines Magnetrührers, gegeben. Dieser weist typischerweise einen Rührfisch auf, der sowohl die Kühlkörper als auch die Dentalrestaurationsteile bewegt und für die erwünschte wechselnde Kontaktgabe sorgt.

In einer andere Ausführungsform ist es vorgesehen, dass das Dentalrestaurationsteil bei ausgeschaltetem Rührer auf die Kühlkörper auflegbar ist, ohne dass es einsinkt und bei eingeschalteten Rührer zusammen mit den Kühlkörpern in diese eingesunken bewegt wird.

Vorteilhaft kann der Rührer ein Magnetrührer sein, dessen Rührfisch mit einem temperaturfesten, glatten und nicht abrasiven Material umhüllt ist, kantenfrei ist und Abrundungen aufweist. Dessen Radius beträgt mindestens 3 mm, insbesondere mind. 5 mm. Bei dieser Ausführungsform kann der Rührer mit einer abriebfesten und wärmefesten Beschichtung versehen sein, beispielsweise emailliert, und zudem kantenfrei sein.

Bei dieser Ausführungsform kann es vorgesehen sein, dass der Rührer ein elektrisch betriebener Rührer ist, der insbesondere beim Auflegen eines Dentalrestaurationsteils automatisch einschaltbar ist

Weitere Vorteile, Einzelheiten und Merkmale ergeben sich aus der nachstehenden Beschreibung mehrere Ausführungsbeispiele der Erfindung anhand der Zeichnung.

Es zeigen:
- Fig. 1: eine schematische Seitenansicht einer Ausführungsform der Erfindung;
- Fig. 2: eine weitere Ausführungsform der Erfindung, ebenfalls in schematischer Darstellung; und
- Fig. 3: eine dritte Ausführungsform der Erfindung, die gegenüber Fig. 2 modifiziert ist.

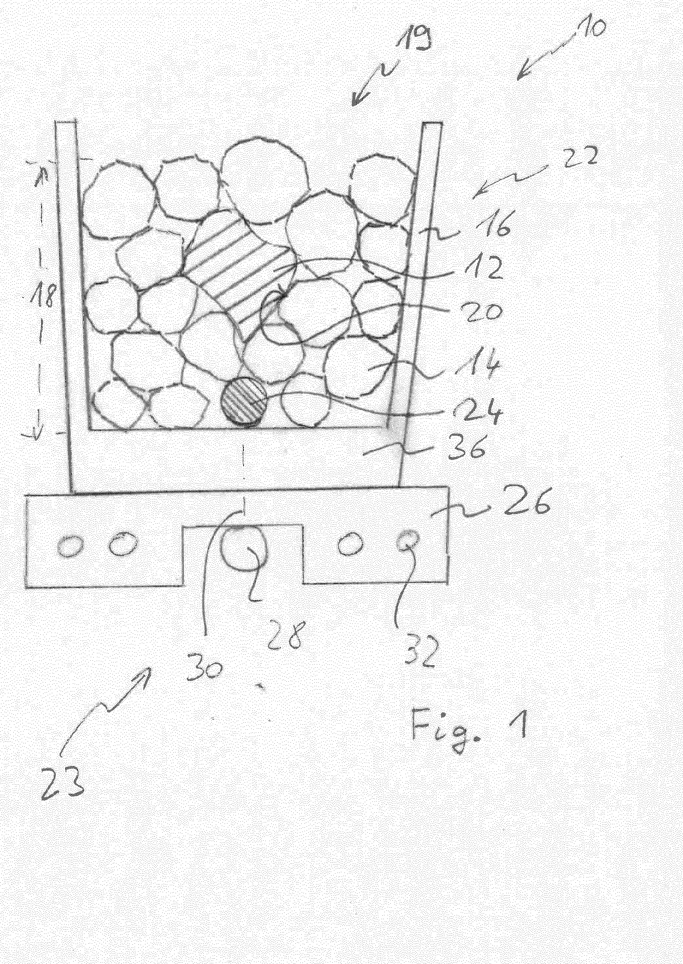

Fig. 1 zeigt eine erfindungsgemäße System 10 aus einem Dentalrestaurationsteil 12 und einer Kühlvorrichtung 19. Das Dentalrestaurationsteil 12 ist in einer Vielzahl von Kühlkörpern 14 aufgenommen und eingebettet.

Die Kühlkörper 14 sind als Schüttgut in einem Gefäß 16 aufgenommen, und zwar bis zu einer Füllhöhe 18. Die Füllhöhe 18 liegt bei eingebrachtem Dentalrestaurationsteil 12 bei etwa 90% der Gefäßhöhe und ohne Dentalrestaurationsteil deutlich darunter, beispielsweise bei 80%.

Die Kühlkörper 18 sind im Wesentlichen kugelförmig, weisen jedoch Kontaktflächen 20 in zahlreichen unterschiedlichen Ausprägungen, also Formen und Größen, auf. Diese sind so ausgelegt, dass sie zahlreiche Möglichkeiten bieten, flächig an dem Dentalrestaurationsteil 12 anzuliegen.

Bevorzugt sind unterschiedliche Kugelgrößen vorgesehen, wobei die kleinsten Kugeln eine Größe von nicht weniger als 0.05 mm haben. Bevorzugt weisen die größten Kugeln einen Durchmesser in der Weise auf, dass sie auch in kleine Kavitäten der Restauration passen.

Durch die Kontaktflächen 20 wird der Wärmeübergang besonders gut unterstützt.

In Fig. 1 sind die Kontaktflächen bewusst ungleichmäßig verteilt dargestellt. Dies ist beabsichtigt und ermöglicht verschiedene Anlagemöglichkeiten an dem Dentalrestaurationsteil 12.

Die erfindungsgemäße Kühlvorrichtung 19 weist auch einen Rührer 23 auf. Dieser dient dazu, dass zunächst heiße Dentalrestaurationsteil 12 mit den zunächst kalten Kühlkörpern 14 umzurühren. Die Masse der Kühlkörper 14 übersteigt diejenige des Dentalrestaurationsteiles um ein Mehrfaches, z.B. um das 5- bis 200-fache, im dargestellten Ausführungsbeispiel um das 20-fache.

Durch die Rührbewegung erfolgt eine wechselnde Anlage von Flächen des Dentalrestaurationsteiles 12 an Kontaktflächen 20 der Kühlkörper 14. Hierdurch kommen immer neue und häufig kalte Kontaktflächen 20 mit dem Dentalrestaurationsteil 12 in Anlage, die dieses überraschend rasch, aber dennoch schonend abkühlen.

Die Kühlkörper weisen erfindungsgemäß bevorzugt einen mittleren Wärmeleitwert auf, deutlich größer als Kunststoff und deutlich geringer als Metall. Sie können z.B. aus Keramik bestehen.

Besonders günstig ist es, dass das Dentalrestaurationsteil 12 vollständig in dem Bett 22 aus Kühlkörpern 14 aufgenommen ist. Um dies sicherzustellen, ist das spezifische Gewicht der Kühlkörper 14 höchstens so groß wie dasjenige des Dentalrestaurationsteiles 12, und bevorzugt 20% kleiner. Daher sinkt das Dentalrestaurationsteil 12 in das Bett 22 ein und ist dort vollständig von den Kühlkörpern 14 umgeben.

Der erfindungsgemäße Rührer 23 ist im Beispielsfall als Magnetrührer ausgebildet. Hierzu ist das Gefäß 16 nicht-ferromagnetisch, also für Magnetkräfte durchlässig. Ein Rührfisch 24 ist unten zentral in dem Gefäß 16 aufgenommen. In an sich bekannter Weise ist eher länglich und im dargestellten Ausführungsbeispiel mit kreisrundem Querschnitt und endseitig verrundet.

Der Rührfisch 24 weist eine Beschichtung aus Glas, einer Emaillierung oder aus PTFE auf, die aus Fig. 1 nicht ersichtlich ist.

Zum Rührer gehört ferner eine Stellplatte 26 sowie ein Magnet 28, der in der Stellplatte 26 aufgenommen ist und sich um eine Achse 30 dreht.

Aufgrund der Magnetkraft dreht sich auch der Rührfisch 24 in an sich bekannter Weise um die Achse 30 mit und setzt dadurch die Kühlkörper 14 und das Dentalrestaurationsteil 12 in Bewegung.

Durch diese Bewegung gelangen immer neue Stellen des Dentalrestaurationsteils 12 in Kontakt mit unterschiedlichen Kontaktflächen 20 an unterschiedlichen Kühlkörpern.

In dem dargestellten Ausführungsbeispiel weist die Stellplatte 26 eine Kühlschlange 32 auf, die sie weiter abkühlt. Über den vergleichsweise dicken Boden 36 des Gefäßes 16, der auf der Stellplatte 26 auffliegt, werden die Kühlkörper 14 nachgekühlt.

Bei entsprechend großem und dementsprechend günstigem Massenverhältnis zwischen Kühlkörpern 14 und Dentalrestaurationsteil 12 ist dies jedoch nicht erforderlich, so dass eine Nachkühlung entbehrlich ist.

Alternativ zur Nachkühlung können auch Reserve-Kühlkörper 14 in einem Vorratsbehälter bereitgehalten werden, und nach Abkühlung des Dentalrestaurationsteiles 12 wird dann kurzerhand das Gefäß 16 mit den Kühlkörpern 14 und dem Dentalrestaurationsteil 12 vollständig entleert, und aus dem Vorratsbehälter wird ein neues Bett 22 an Kühlkörpern 14 in dem Gefäß 16 für die Aufnahme des nächsten heißen Dentalrestaurationsteiles 12 bereitgestellt.

Für den Betrieb der erfindungsgemäßen Kühlvorrichtung 19 wird zunächst das heiße Dentalrestaurationsteil 12 auf das Bett 22 aus Kühlkörpern 14 aufgelegt. Der Rührer 23 wird dann umgehend in Betrieb genommen und bewirkt, dass sich die Kühlkörper 14 angetrieben durch den Rührfisch 24 bewegen.

Hierdurch sinkt das etwas schwerere Dentalrestaurationsteil 12 in das Bett 22 der Kühlkörper 16 ein und wird allseitig gekühlt.

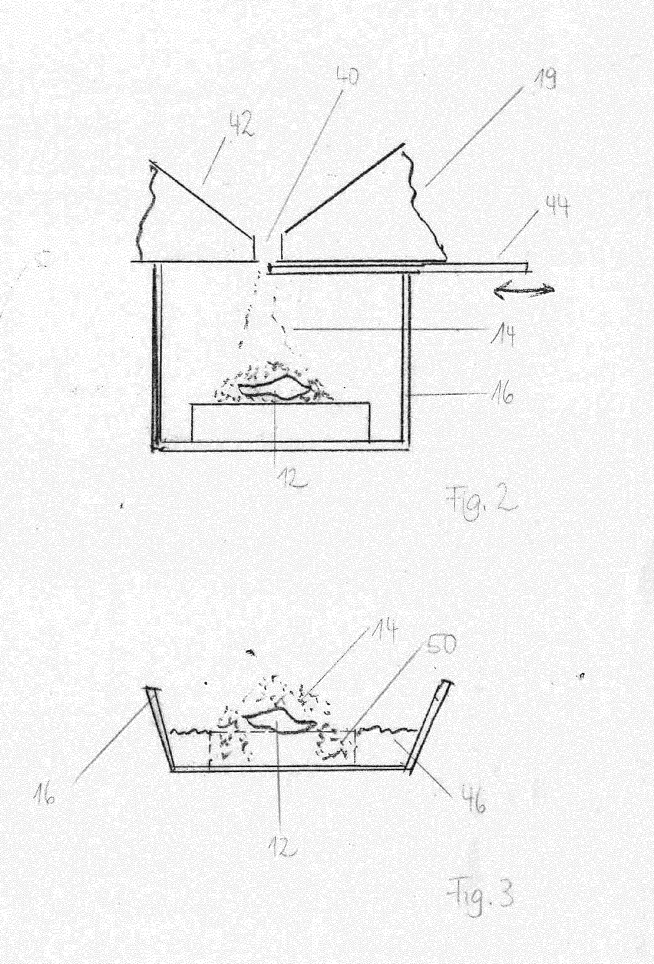

Fig. 2 zeigt eine modifizierte Ausführungsform eines erfindungsgemäßen Systems 10. In dieser Ausführungsform weist die Kühlvorrichtung 19 eine Rieselöffnung 40 auf. Die Rieselöffnungen 40 ist an in der untersten Stelle eines Schüttgutbehälter 42 für Kühlkörper 14 angebracht.

Bevorzugt ist die Rieselöffnung 40 hinsichtlich ihrer Öffnungsgröße und ihres Öffnungsquerschnitts verstellbar. Dies lässt sich über einen Schieber 44 realisieren, wie er in Fig. 2 schematisch dargestellt ist.

Der Schüttgutbehälter 42 zusammen mit der Rieselöffnung 40 wirkt wie eine Sanduhr. Aus der Rieselöffnung 40 fallen Kühlkörper 14 auf das Dentalrestaurationsteil. 12. Sie bilden dort eine Art Haufen, unter dem das Dentalrestaurationsteil 12 begraben ist, so dass es durch den Kontakt mit den Kühlkörpern 14 gekühlt wird.

In einer weiter modifizierten Ausführungsform ist es vorgesehen, unterhalb des Dentalrestaurationsteiles 12 eine kleine Rüttelvorrichtungen anzubringen. Durch diese werden immer neue Kühlkörper 14 mit dem Dentalrestaurationsteil in Kontakt gebracht, so dass die Kühlung intensiviert wird.

Eine weitere Ausführungsform eines erfindungsgemäßen Systems 10 ist aus Fig. 3 ersichtlich. Dort erstreckt sich ein Wasserbad 46 knapp unterhalb des Dentalrestaurationsteiles 12. Das Dentalrestaurationsteil 12 liegt hierzu auf einem Podest 48, dass eine Höhe hat, die ausreicht, dass das Dentalrestaurationsteil 12 bei Beginn des Kühlvorgangs sich oberhalb des Wasserspiegels befindet. Durch aufgebrachte Kühlkörper 14, beispielsweise durch die Rieselöffnung 40 gemäß Fig. 2, wird nun das Dentalrestaurationsteil 12 gekühlt, und zwar zunächst im Wesentlichen von oben.

Die Kühlkörper 14 fallen durch das mit einem Rost 50 versehene Podest in das Wasser 46. Hierdurch steigt der Wasserspiegel, und das Dentalrestaurationsteil 12 wird hierdurch zusätzlich auch von unten gekühlt.

Günstig ist hier eine erst schonende Abkühlung durch die Kugeln und dann, wenn das Thema Thermoschock nicht mehr heikel ist, z.B. bei ca. 60°C, wird noch schnell mit Wasser auf Endtemperatur gekühlt. Hierdurch wird das Delta T wieder vergrößert, damit die Endabkühlung nicht zu langsam vonstattengeht.

Anstelle des hier erwähnten Wassers kann auch ein beliebiges anderes liquides Kühlmedium verwendet werden, das sich mit dem jeweils verwendeten Material des Dentalrestaurationsteiles 12 verträgt.

Insbesondere ist es günstig, die Wärmeleitfähigkeit und Wärmekapazität, aber auch die Masse des Kühlmedium an die der Kühlkörper 14 anzupassen, um so für eine gleichmäßige Abkühlung zu sorgen.

In einer weiteren Ausführungsform ist eine Art Wäschetrommel als Gefäß vorgesehen:
Beim Kühlen durch freie Konvektion entsteht eine lange Wartezeit zwischen dem Abschluss der Wärmebehandlung und dem Zeitpunkt, zu dem die Restauration weiterverarbeitet werden kann.

In einer erfindungsgemäßen Ausführungsform ist die Abkühlung in Form einer Wäschetrommel vorgesehen. Ein Zylinder, der sich dreht, weist zahlreiche Löcher zur Bildung eines Siebs auf. Die Restauration liegt entweder frei in den Kugeln oder in einem fixen, aber für die Kugeln "durchlässigen" Käfig.

Die Kühlkörper oder das Granulat muss die maximale Temperatur des Dentalrestaurationsteils aushalten (ca. 1000°C), und möglichst rasch und gut Wärme aufnehmen.

Besonders günstig ist es - unabhängig von der Ausführungsform - , wenn sich die Restauration in einem definierten Bereich /an einem definierten Ort befindet, damit man sie nicht nach Ende des Kühlvorgangs in den Kühlkörpern suchen gehen muss.

## Patentansprüche

1. System aus einem Dentalrestaurationsteil oder mehreren Dentalrestaurationsteilen, und/oder mit einem gegebenenfalls in eine Muffel eingebetteten Dentalrestaurationsteil, und einer Kühlvorrichtung, **dadurch gekennzeichnet, dass** die Kühlvorrichtung Kühlkörper (14) als Schüttgut und eine Bewegungsvorrichtung aufweist, mit welcher Kühlkörper (14) und das oder die Dentalrestaurationsteile (12) relativ zueinander bewegbar sind, und dass ein geschlossenes oder offenes Gefäß (16) die Kühlkörper (14) und das Dentalrestaurationsteil (12) aufnimmt, wobei insbesondere das Volumen der Kühlkörper (14) mindestens das 3-fache des Volumens des Dentalrestaurationsteiles (12) ist und dass das Gefäß (16) für die Aufnahme der Kühlkörper und des Dentalrestaurationsteils, ggf. einschließlich der Muffel, eine Kühlkörper-Auflagefläche aufweist, die ihrerseits aktive Kühlelemente aufweist, über welche die Kühlkörper ggf. nachkühlbar sind.

2. System nach Anspruch 1, **dadurch gekennzeichnet, dass** die Bewegungsvorrichtung ein Bewegungselement aufweist der dafür bestimmt ist, die Kühlkörper (14) zusammen mit dem Dentalrestaurationsteil in einem Relativbewegungsraum von Kühlkörper (14) und Dentalrestaurationsteil (12) zu bewegen.

3. System nach Anspruch 1, **dadurch gekennzeichnet, dass** die Kühlkörper (14) als Granulat, als Hohlkörper, als prismatische Körper, als Quader mit abgerundeten Ecken und Kanten oder als runde Körper, insbesondere im wesentlichen in Kugelform, je mit Kontaktflächen, ausgebildet sind.

4. System nach einem der vorhergehenden Ansprüche, **dadurch gekennzeichnet, dass** die Anzahl der Kontaktpunkte und/oder Kontaktflächen zwischen Dentalrestaurationsteil und Kühlkörpern zwischen 3 Kontakten/cm² und 100.000 Kontakten/cm² beträgt, insbesondere zwischen 12 Kontakten/cm² und 12.000 Kontakten/cm².

5. System nach einem der vorhergehenden Ansprüche, **dadurch gekennzeichnet, dass** die Kühlkörper (14) aus keramischem Material bestehen, insbesondere aus Aluminiumoxid oder Zirkoniumdioxid, oder aus Glas oder aus Metall, letzteres insbesondere für die Kühlung einer Muffel, oder aus Verbundwerkstoffen oder Werkstoffverbunden der o.g. Materialklassen sowie mit Glas oder Keramik beschichtete Metallkühlkörper.

6. System nach einem der vorhergehenden Ansprüche, **dadurch gekennzeichnet, dass** die Kühlkörper (14) für Dentalrestaurationsteile (12) eine Größe zwischen 50 µm und 10 mm aufweisen.

7. System nach einem der vorhergehenden Ansprüche, **dadurch gekennzeichnet, dass** ein Gefäß (16) für die Aufnahme der Kühlkörper (14) und des Dentalrestaurationsteils (12) eine Aufnahmevolumen aufweist, das ein Vielfaches des Volumens des Dentalrestaurationsteils beträgt.

8. System nach Anspruch 2, **dadurch gekennzeichnet, dass** eine Nachkühlvorrichtung als Teil der Kühlvorrichtung einem Teil, insbesondere einem sich ändernden Teil, der Kühlkörper (14) während Ihrer Relativbewegung bezogen auf das Dentalrestaurationsteil oder die Muffel, zur Nachkühlung dieser, benachbart ist oder in deren Nachbarschaft gerät, unter Kühlung der Kühlkörper (14) durch die Nachkühlvorrichtung, und dass die Nachkühlvorrichtung insbesondere unten in dem Relativbewegungsraum der Kühlkörper (14) angeordnet ist.

9. System nach einem der vorhergehenden Ansprüche, **dadurch gekennzeichnet, dass** mindestens teilweise die Kühlvorrichtung, insbesondere mindestens ein Teil der Kühlkörper (14) in einer Nachkühlvorrichtung aufbewahrt ist, auf einer Temperatur deutlich unterhalb der Raumtemperatur, insbesondere unter 0 Grad, und für die Verwendung gegen Ende der Kühlphase bestimmt ist.

10. System nach einem der vorhergehenden Ansprüche, **dadurch gekennzeichnet, dass** ein Gefäß (16) für die Aufnahme des Dentalrestaurationsteiles oder der Dentalrestaurationsteile und der Kühlkörper eine Flüssigkeit (46) aufweist.

11. System nach Anspruch 10, **dadurch gekennzeichnet, dass** die Flüssigkeit sich vor der Aufbringung oder Einbringung der Kühlkörper (14) unterhalb des Dentalrestaurationsteiles befindet und deren Pegel durch Einbringen der Kühlkörper (14) ansteigt und insbesondere das Dentalrestaurationsteil (12) erreicht.

12. System nach einem der Ansprüche 1 bis 12, **dadurch gekennzeichnet, dass** die Rieselöffnung (40) in ihrer Größe und/oder Abmessung einstellbar ist.

## Claims

1. A system of a dental restoration part or several dental restoration parts, and/or with a dental restoration part which is possibly embedded in a muffle, and a cooling device, **characterized in that** the cooling device comprises cooling bodies (14) as bulk material and a movement device by means of which cooling bodies (14) and the dental restoration part(s) (12) are movable relative to one another, and **in that** a closed or open vessel (16) receives the cooling bodies (14) and the dental restoration part (12), wherein in particular the volume of the cooling bodies (14) is at least three times the volume of the dental restoration part (12), and **in that** the vessel (16) for receiving the cooling bodies and the dental restoration part, possibly including the muffle, comprises a cooling body support surface which in turn comprises active cooling elements, by means of which the cooling bodies may possibly be after-cooled.

2. The system as claimed in claim 1, **characterized in that** the movement device comprises a movement element which is intended to move the cooling bodies (14) together with the dental restoration part in a relative movement space of cooling body (14) and dental restoration part (12).

3. The system as claimed in claim 1, **characterized in that** the cooling bodies (14) are configured as granules, as hollow bodies, as prismatic bodies, as cuboids with rounded corners and edges or as round bodies, in particular substantially in the shape of a ball, each comprising contact surfaces.

4. The system as claimed in any of the preceding claims, **characterized in that** the number of contact points and/or contact surfaces between the dental restoration part and the cooling bodies is between 3 contacts/cm² and 100,000 contacts/cm², in particular between 12 contacts/cm² and 12,000 contacts/cm².

5. The system as claimed in any of the preceding claims, **characterized in that** the cooling bodies (14) consist of a ceramic material, in particular of aluminum oxide or zirconium oxide, or of glass or of metal, the latter particularly for cooling a muffle, or of composite materials or material compounds of the above-mentioned classes of materials as well as metal cooling bodies coated with glass or ceramic.

6. The system as claimed in any of the preceding claims, **characterized in that** the cooling bodies (14) for dental restoration parts (12) comprise a size of between 50 µm and 10 mm.

7. The system as claimed in any of the preceding claims, **characterized in that** a vessel (16) for receiving the cooling bodies (14) and the dental restoration part (12) comprises a reception volume amounting to many times the volume of the dental restoration part.

8. The system as claimed in claim 2, **characterized in that** an after-cooling device as part of the cooling device is adjacent to a part, in particular a changing part, of the cooling bodies (14), or ends up in the vicinity thereof, during their relative movement with regard to the dental restoration part or the muffle, for after-cooling thereof, while the cooling bodies (14) are cooled by the after-cooling device, and **in that** the after-cooling device is disposed in particular at the bottom of the relative movement space of the cooling bodies (14).

9. The system as claimed in any of the preceding claims, **characterized in that** at least partially the cooling device, in particular at least part of the cooling bodies (14) is stored in an after-cooling device, at a temperature which is significantly below room temperature, in particular below 0 degrees, and is intended to be used towards the end of the cooling phase.

10. The system as claimed in any of the preceding claims, **characterized in that** a vessel (16) for receiving the dental restoration part or the dental restoration parts and the cooling bodies comprises a liquid (46).

11. The system as claimed in claim 10, **characterized in that** the liquid is located below the dental restoration part before the cooling bodies (14) are placed or inserted, and that its level rises as the cooling bodies (14) are inserted and in particular reaches the dental restoration part (12).

12. The system as claimed in claims 1 to 12, **characterized in that** the size and/or dimensions of the trickle opening (40) are adjustable.

## Revendications

1. Système composé d'une pièce de restauration dentaire ou de plusieurs pièces de restauration dentaire, et/ou avec une pièce de restauration dentaire éventuellement noyée dans un moufle, et d'un dispositif de refroidissement, **caractérisé en ce que** le dispositif de refroidissement présente des corps de refroidissement (14) en tant que produit en vrac et un dispositif de déplacement avec lequel les corps de refroidissement (14) et la ou les pièces de restauration dentaire (12) peuvent être déplacés les uns par rapport aux autres, et **en ce qu'**un récipient (16) fermé ou ouvert reçoit les corps de refroidissement (14) et la partie de restauration dentaire (12), où le volume des corps de refroidissement (14) est en particulier au moins le triple du volume de la partie de restauration dentaire (12) et **en ce que** le récipient (16) destiné à recevoir les corps de refroidissement et la partie de restauration dentaire, y compris, le cas échéant, le moufle, présente une surface d'appui de corps de refroidissement qui, de son côté, présente des éléments de refroidissement actifs par lesquels les corps de refroidissement peuvent être éventuellement refroidis. peuvent être refroidis ultérieurement.

2. Système selon la revendication 1, **caractérisé en ce que** le dispositif de déplacement présente un élément de déplacement qui est destiné à déplacer les corps de refroidissement (14) conjointement avec la partie de restauration dentaire dans un espace de déplacement relatif du corps de refroidissement (14) et de la partie de restauration dentaire (12).

3. Système selon la revendication 1, **caractérisé en ce que** les corps de refroidissement (14) se présentent sous la forme de granulés, de corps creux, de corps prismatiques, de parallélépipèdes avec des coins et des arêtes arrondis ou de corps ronds, en particulier essentiellement de forme sphérique, chacun avec des surfaces de contact.

4. Système selon l'une des revendications précédentes, **caractérisé en ce que** le nombre de points de contact et/ou de surfaces de contact entre la partie de restauration dentaire et les corps de refroidissement est compris entre 3 contacts/cm² et 100 000 contacts/cm², notamment entre 12 contacts/cm² et 12 000 contacts/cm².

5. Système selon l'une des revendications précédentes, **caractérisé en ce que** les dissipateurs (14) sont en matériau céramique, notamment en oxyde d'aluminium ou en dioxyde de zirconium, ou en verre ou en métal, ce dernier notamment pour le refroidissement d'un moufle, ou en matériaux composites ou en matériaux combinés des classes de matériaux précitées, ainsi que des dissipateurs métalliques revêtus de verre ou de céramique.

6. Système selon l'une des revendications précédentes, **caractérisé en ce que** les dissipateurs thermiques (14) pour les éléments de restauration dentaire (12) ont une taille comprise entre 50 µm et 10 mm.

7. - Système selon l'une des revendications précédentes, **caractérisé en ce qu'**un réceptacle (16) destiné à recevoir les dissipateurs (14) et la pièce de restauration dentaire (12) présente un volume de réception qui est un multiple du volume de la pièce de restauration dentaire.

8. Système selon la revendication 2, **caractérisé en ce qu'**un dispositif de post-refroidissement faisant partie du dispositif de refroidissement est adjacent ou vient au voisinage d'une partie, en particulier d'une partie changeante, des corps de refroidissement (14) pendant leur mouvement relatif par rapport à la partie de restauration dentaire ou au moufle, pour le post-refroidissement de ceux-ci, avec refroidissement des corps de refroidissement (14) par le dispositif de post-refroidissement, et **en ce que** le dispositif de post-refroidissement est disposé en particulier en bas dans l'espace de mouvement relatif des corps de refroidissement (14).

9. Système selon l'une des revendications précédentes, **caractérisé en ce qu'**au moins partiellement le dispositif de refroidissement, notamment au moins une partie des dissipateurs (14) est conservée dans un dispositif de post-refroidissement, à une température nettement inférieure à la température ambiante, notamment inférieure à 0 degré, et est destinée à être utilisée vers la fin de la phase de refroidissement.

10. Système selon l'une des revendications précédentes, **caractérisé en ce qu'**une enceinte (16) destinée à recevoir la ou les pièces de restauration dentaire et le dissipateur thermique comporte un liquide 46).

11. Système selon la revendication 10, **caractérisé en ce que** le liquide se trouve en dessous de la pièce de restauration dentaire avant l'application ou la mise en place des dissipateurs (14) et que son niveau augmente par la mise en place des dissipateurs (14) et atteint notamment la pièce de restauration dentaire (12).

12. Système selon l'une des revendications 1 à 12, **caractérisé en ce que** la taille et/ou la dimension de l'ouverture de ruissellement (40) est réglable.
